# EUROPEAN PATENT SPECIFICATION

(11) **EP 3 884 174 B1**
(45) Date of publication and mention of the grant of the patent: **18.01.2023**
(21) Application number: 19848961.9
(22) Date of filing: 25.11.2019
(51) Int. Cl.: F16B 12/24, F16B 5/01, F16B 12/46, A47B 96/20, B64C 1/00

(54) **AN IMPROVED JOINING SYSTEM**
VERBESSERTES VERBINDUNGSSYSTEM
SYSTÈME D'ASSEMBLAGE AMÉLIORÉ

(30) Priority: 23.11.2018 GB 201819130
(43) Date of publication of application: 29.09.2021
(73) Proprietor: CAUSEWAY AERO GROUP LIMITED, Lisburn, Antrim BT28 2SA (GB)
(72) Inventor: GIBB, Richard, Lisburn, Antrim BT28 2SA (GB); HINDS, Peter, Lisburn, Antrim BT28 2SA (GB)
(74) Representative: Hanna, John Philip
(86) International application number: PCT/EP2019/082482
(87) International publication number: WO 2020/104704

(56) References cited:
- WO-A2-2009/088227
- US-A- 3 351 365
- US-A1- 2018 001 840
- US-A1- 2018 195 269

## Description

The present invention relates to an improved system for joining panels, in particular for joining together at least two lightweight panels for making cabin furniture, especially of a galley.

Galleys and other cabin furniture in aircraft and other vehicles are usually constructed from lightweight composite panels much in the same fashion as wood cabinetry. Such composite panels usually have a cellular core of hexagonal honeycomb or foam sandwiched between lightweight cover sheets. Advantageously, cabinetry constructed from such composite panels offer high structural strength and good rigidity with the benefit of ultra-light weight compared with plywood and other conventional products. However, joining composite panels can be problematic since there is no solid core inside the panels. Indeed, the absence of a dense core results in insufficient structural or rigid mass for retaining a screw or conventional types of fastener.

The known methods of joining lightweight panels include epoxy bonding, angle corner brackets that are fastened to the external surface of the panels, edge bonding with pins set in epoxy and/or surface bonding overlapping joints. Such methods of joint construction are expensive, time consuming and labour-intensive. Furthermore, the known methods of joining lightweight panels do not allow joined panels to be easily disassembled and subsequently reassembled since separating the panels causes them to be irreparably damaged. Therefore, there is a need to have a system for joining lightweight panels to other structures that allows the panels to be easily separated without causing damage to the panels.

WO2009088227 A2 discloses a system according to the preamble of claim 1.

It is an object of the present invention to prevent or mitigate the problems of known solutions identified above. In particular, it is an object of the invention to provide a system for joining lightweight panels that allows fast and easy assembly and disassembly of the panels.

It is a further object of the invention to provide a system for joining lightweight panels that is releasable and/or not permanent, in order to be suitably replaced.

Another object of the present invention is to provide a joining system of low-cost construction and, at the same time, allowing a fast and easy assembly/disassembly, preferably even on site.

Another object of the invention is to provide a joining system that removes the requirement of bonding the adjacent panels together with adhesives or glue.

Another object of the invention is to provide a system that can be used to join the panels at different locations, thus enabling a plurality of configurations of joined panels.

Another object of the invention is to provide a system that reduces the number of steps and time required to join lightweight panels.

Another object of the invention is to provide a joining system comprising components that are of simple construction and modular design.

Another object of the invention is to provide a joining system that allows a stable and secure lock of the joints.

Another object of the invention is to provide a joining system that does not require highly specialized and experienced workmanship for its installation.

Another object of the invention is to provide a joining system that ensures a correct reciprocal position and/or alignment of the joined panels.

Another object of the invention is to provide a joining system that is suitable to be used with all kinds of lightweight panels.

Another object of the invention is to provide cabin furniture, in particular for a galley, that is of modular design and can be suitably adapted based on the geometry available, that can be manufactured at low-cost, that can be easily transported and which enables easy and quick assembly/disassembly.

According to a first aspect of the invention there is provided a system according to claim 1. Advantageously, the releasable nature of the fastening means allows the system to be used to join lightweight panels in a way that is non-permanent, enabling panels to be replaced and/or reconfigured within e.g. an aircraft cabin.

By 'releasably fastening' it is meant attaching in a non-permanent way that enables parts to be joined/separated repeatedly.

The at least one body being configured to be located inside the thickness of a panel between the two mutually opposing surfaces of the panel means that the at least one body is shaped and/or sized to be accommodated between the two mutually opposing surfaces of the panel.

Preferably the structure is a further panel.

Preferably the structure is a further body located within a further panel.

Ideally the further body is configured to be located inside the thickness of the further panel between two mutually opposing surfaces of the further panel.

Optionally the further body has a similar construction to the at least one body.

Preferably the or each panel is a lightweight panel.

Preferably the or each panel comprises a core sandwiched between two skins.

Preferably the or each panel comprises a resin board.

Preferably the or each core is a cellular core of hexagonal honeycomb.

Preferably the or each core is made of honeycomb paper sheet.

Preferably the or each core is made of flame-resistant material.

Preferably the or each core is made of honeycomb paper sheet coated and bonded together with a resin, in particular phenolic resin.

Preferably the or each core is made of a material also known with the trademark Nomex ^{®}.

Preferably the skins are lightweight cover sheets.

Preferably the skins are made of woven fiberglass.

Preferably a cavity is defined inside the or each panel.

Preferably a cavity is defined in an edge portion of the panel.

Preferably the or each cavity is defined between the skins of the panel.

Preferably the or each cavity is obtained by removing a portion of the core from the panel.

Preferably the or each cavity is delimited by the skins of the panel.

Preferably the at least one body is a block.

Preferably the system comprises a plurality of similar blocks.

Preferably the system comprises at least two identical bodies.

Preferably the system comprises at least two identical blocks.

Ideally the at least one body has a thickness that substantially corresponds to the internal distance between the mutually opposing surfaces of the panel.

Preferably the at least one body has a thickness that substantially corresponds to the internal distance between the skins of the panel.

Preferably the at least one body is shaped and/or sized so that, in use, at least one surface of said body engages an internal surface of a skin of the panel.

Preferably the at least one body is shaped and/or sized so that both surfaces of said body engage the internal surfaces of the corresponding skins of the panel.

Preferably the at least one body has a thickness that substantially corresponds to the thickness of the core of the panel.

Preferably the at least one body has at least one flat planar surface that is intended to be in contact with the inner surface of the skin of the panel.

Preferably the at least one body is adapted to fit inside at least one cavity in the panel.

Preferably the at least one body is press-fitted inside a cavity defined inside the thickness of the edge portion of the panel.

Preferably the at least one body is press-fitted inside said cavity between the skins of the panel.

Preferably the at least one body is fitted inside the cavity defined in correspondence of the edge portion of the panel

Preferably the at least one body is bonded to the panel via an adhesive means.

Ideally the adhesive means comprises an adhesive, resin or glue.

Preferably the or each body comprises two main planar surfaces.

Preferably the or each body comprises a first main planar surface and a second main planar surface.

Preferably the main planar surfaces of the or each body are substantially parallel.

Preferably the or each body comprises at least one lateral surface defined between the two main planar surfaces.

Preferably the or each body comprises a plurality of lateral surfaces defined between the two main planar surfaces.

Preferably the or each body comprises four lateral surfaces defined between the two main planar surfaces.

Preferably the or each body comprises two pairs of substantially parallel lateral surfaces defined between the two main planar surfaces.

Preferably at least one lateral surface is substantially perpendicular to the two main planar surfaces.

Preferably each lateral surface is perpendicular to the two main planar surfaces.

Ideally the distance between the main planar surfaces of the or each body corresponds to the thickness of the or each body.

Ideally, the distance between the main planar surfaces of the or each body corresponds to the height of the lateral surface(s).

Preferably the or each lateral surface is substantially planar.

Preferably the heights of all lateral surfaces are substantially equal.

Preferably the or each body has a prismatic or parallelepiped shape.

Preferably the angle between neighbouring lateral surfaces is 90°.

Preferably the corners between neighbouring lateral surfaces are chamfered.

Preferably the corners between neighbouring lateral surfaces are chamfered at an angle of 45°.

Preferably the respective planes defined by the chamfered corners are perpendicular to the two main planar surfaces.

Preferably the or each body is plate-shaped.

Preferably the or each body has a length, a width and a height.

Ideally the height of the or each body is smaller than its length and width.

Preferably at least one of the planar surfaces and/or the lateral surface(s) of the or each body is smooth.

Preferably at least one of the planar surfaces and/or the lateral surface of the body is configured for receiving glue for defining a mechanical key to hold the inserted body in place inside the panel.

Ideally the at least one body comprises at least one adhesion enhancement means. Advantageously, the adhesion enhancement means can improve the adhesion properties of the body to enable the body to be adhered to e.g. a lightweight panel more effectively.

Preferably, the adhesion enhancement means is located on the first main planar surface of the at least one body.

Preferably the adhesion enhancement means is located on the first and second main planar surfaces of the at least one body.

Preferably the adhesion enhancement means is located on at least one lateral surface of the at least one body.

Preferably the adhesion enhancement means is located on at least two parallel lateral surfaces of the at least one body.

According to the invention, the adhesion enhancement means is located on each lateral surface of the at least one body.

Preferably the adhesion enhancement means is located on the main planar surfaces and lateral surfaces of the at least one body.

Preferably the adhesion enhancement means increases the adhesion properties of a surface of the or each body.

Preferably the adhesion enhancement means comprises a featured or non-flat surface. Advantageously, providing a featured or non-flat surface on the body increases the surface area of the body to increase the contact area between the body and any adhesive means.

Preferably the adhesion enhancement means comprises a keying surface.

Preferably the adhesion enhancement means comprises a knurled, scratched roughened and/or scored surface.

Preferably the adhesion enhancement means comprises a plurality of stopped holes in a regular arrangement.

Preferably the adhesion enhancement means comprises one or more recesses. According to the invention, the adhesion enhancement means comprises a plurality of elongate recesses located on at least one surface of the body.

Preferably the adhesion enhancement means comprises one or more elongate recesses located on one or more lateral surfaces of the body.

According to the invention, each elongate recess extends in a direction which is substantially parallel to at least one main planar surface of the body.

Preferably the adhesion enhancement means comprises ribs and/or grooves for receiving adhesive means.

Preferably at least one surface on the lateral surface of the body comprises a plurality of ribs and/or grooves for receiving adhesive means.

Preferably the or each rib and/or groove extends in a direction that is substantially perpendicular to the direction of the height of the body.

Preferably the at least one body is constructed from a rigid material.

Preferably the at least one body is constructed from metal and/or metal alloy.

Ideally the metal is aluminum. Advantageously, the use of aluminium provides a lightweight body suitable for use in an aircraft cabin.

Ideally the metal alloy is steel.

Optionally the at least one body is constructed from polymeric material.

Preferably the polymeric material is thermoplastic reinforced plastic or polyether ether ketone (PEEK).

Preferably the system comprises a plurality of fastening means.

Preferably the or each fastening means comprises at least one pin that is attachable to the at least one body.

Preferably the or each fastening means is releasably attachable to the at least one body and a further body configured to be located inside the thickness of a further panel, wherein the further panel is to be attached to the panel.

Preferably the or each fastening means comprises at least one pin.

Preferably the or each fastening means comprises a plurality of pins.

Preferably the plurality of pins comprise at least three pins.

Preferably the plurality of pins are aligned along an axis.

Ideally said plurality of pins are aligned along one of the dimensions of the main planar surfaces of the at least one body.

Preferably the or each pin comprises an elongate shaft.

Preferably the shaft of the or each pin is substantially cylindrical.

Preferably the or each pin has at least one tapered end portion.

Optionally the or each pin has two tapered end portions.

Preferably the or each pin has one externally threaded end portion.

Preferably the externally threaded end portion and tapered end portion are located at opposing ends of the or each pin.

Preferably the or each pin is releasably attachable to the at least one body.

Preferably the or each pin is defined in a single piece with the at least one body.

Preferably the or each pin is integrally formed with the at least one body.

Preferably the or each pin is releasably attachable to the at least one further body.

Preferably the or each pin protrudes from the at least one body.

Preferably the or each pin protrudes from the at least one body at a right angle to at least one surface of the body.

Preferably the or each pin protrudes from the at least one body in a direction which is parallel to at least one surface of the body.

Preferably the or each pin is attachable to the at least one body so as to define a right angle in respect of a surface of the body.

Preferably the or each pin protrudes from the at least one body at an acute or obtuse angle to a surface of the body.

Preferably the or each pin is fixed to the at least one body so as to define an acute or obtuse angle in respect of a surface of the body.

Preferably at least one pin protrudes from a main planar surface of the at least one body.

Preferably at least one pin protrudes from a lateral surface of the at least one body.

Preferably said at least one pin is fixed to the body so as to protrude from one of the main planar surfaces of the body.

Preferably said at least one pin is fixed to the body so as to protrude from the lateral surface of the body.

Preferably said at least one pin protrudes from the thickness of the body.

According to the invention, the body comprises at least one receiving means for receiving the fastening means.

According to the invention, each receiving means comprises one or more holes or apertures located on a surface of the body.

Preferably the or each receiving means comprises a plurality of holes or apertures.

Preferably the or each receiving means comprises two or three holes or apertures.

Preferably the or each receiving means is a stopped hole or aperture.

Preferably the or each receiving means comprises an opening.

Preferably the or each receiving means comprises at least one opening located on a surface of the body.

According to the invention, each receiving means comprises a plurality of openings located on a surface of the body.

According to the invention, each opening provides an entrance to a respective channel in the at least one body.

Preferably the or each receiving means comprises a plurality of channels.

Preferably the or each receiving means comprises two or three channels.

Preferably the or each channel is substantially straight.

Preferably the plurality of channels in a respective receiving means are substantially parallel.

Preferably the or each receiving means comprises at least one channel that passes part of the way through the body to a predefined depth.

Preferably the or each receiving means comprises at least one channel that passes all of the way through the body.

Preferably the or each receiving means comprises at least one channel that passes through the body by entering and exiting said body in correspondence of two parallel and facing portions of the same body.

Preferably the or each body comprises at least one first receiving means and at least one second receiving means.

Preferably the at least one body comprises at least one first receiving means for receiving one or more pins that can be releasably attached thereto.

Preferably the at least one body comprises at least one second receiving means for receiving further pins that are releasably attached to a further body.

Preferably the or each body comprises a plurality of first receiving means and/or a plurality of second receiving means.

Preferably the first receiving means is at least in part internally threaded.

Preferably the or each channel of the or each first receiving means are threaded.

Preferably the or each channel of the or each first receiving means is adapted to receive and retain the threaded end portion of a pin.

Preferably said at least one first receiving means comprises at least one channel.

Preferably the length of the threaded end portion of the or each pin substantially corresponds to the depth of the first receiving means.

Preferably the holes or apertures of the or each second receiving means are not threaded.

Preferably said at least one second receiving means comprises at least one channel.

Preferably the or each second receiving means is configured to receive the tapered end portion of a pin.

Preferably the or each channel of the or each second receiving means is adapted to receive the shaft and tapered end portion of a pin.

Preferably the length of the pin, not including the threaded end portion, substantially corresponds to the depth of the second receiving means.

Optionally the second receiving means is at least in part internally threaded.

Preferably the or each first receiving means is configured for receiving a first fastening means and the or each second receiving means is configured for receiving a second fastening means, the second fastening means being releasably attached to a further body.

Preferably the or each first receiving means is angled in respect of the or each second receiving means.

According to the invention, the or each first receiving means is right angled in respect of the or each second receiving means.

Ideally the channel(s) of the or each first receiving means is right angled in respect of the channel(s) of the or each second receiving means.

Preferably the or each first receiving means is angled in respect of the or each second receiving means such that the first and second fastening means, when received by the first and second receiving means, protrude from the body at an angle to one another.

Preferably the or each first receiving means is angled in respect of the or each second receiving means such that the first and second fastening means, when received by the first and second receiving means, protrude from the body at a right angle to one another.

Ideally the or each first receiving means and the or each second receiving means are located on different surfaces of the at least one body.

Preferably at least one first receiving means is located on a main planar surface of the or each body.

Preferably at least one second receiving means is located on a lateral surface of the at least one body.

Preferably the or each body comprises at least one first receiving means on a main planar surface of the body and at least one second receiving means on a lateral surface of said body.

Optionally the first and second receiving means are both located on lateral surfaces of the at least one body.

Preferably at least one first receiving means is located proximal to one of the edges of the main planar surface of the body.

Preferably the or each body comprises at least one third receiving means.

Preferably the or each body comprises a plurality of third receiving means.

Ideally the or each body comprises at least one third receiving means for receiving a securing means. Advantageously, the securing means can be used to secure the fastening means within the block and thereby prevent the accidental extraction of the fastening means along the development direction of the receiving means and/or fastening means.

Ideally the or each third receiving means comprises a hole or aperture located on a main planar surface of the body.

Preferably said at least one third receiving means comprises at least one channel.

Preferably the or each third receiving means comprises at least one channel configured to receive and retain the securing means.

Preferably the third receiving means is at least in part internally threaded.

Preferably the third receiving means comprises two or three threaded channels.

Preferably the number of channels of the third receiving means corresponds to the number of channels of the second receiving means.

Preferably the channels of the third receiving means are aligned with channels of the second receiving means.

Preferably the longitudinal axis of each channel of the third receiving means is aligned with the longitudinal axis of a channel of the second receiving means such that each channel of the third receiving means intersects a channel of the second receiving means.

Preferably the securing means is a releasable securing means.

Preferably the securing means is a releasable securing means adapted to releasably retain a fastening means within the body.

Preferably the or each pin has a cut out or undercut for engagement with the securing means.

Preferably the or each pin has a cut out or undercut intended to be clamped down by the securing means.

Preferably the securing means comprises one or more grub screws.

Preferably the or each channel of the third receiving means is located within the at least one body.

Preferably the or each channel of the third receiving means extends between an opening on a main planar surface of the body and a channel of the second receiving means.

Preferably the or each channel of the at least one third receiving means provides a path for the securing means to enter a channel of the second receiving means.

Preferably the or each pin is retainable in the second receiving means by a securing means which passes through the third receiving means towards a pin located in the second receiving means.

Preferably the or each channel of the second receiving means is perpendicular to a respective channel of the third receiving means.

Optionally the fastening means comprise snap fitting means.

Preferably the body comprises a portion that engages by snap fit within a corresponding cavity defined in a further body.

Preferably the fastening means comprise snap fitting means.

Preferably the body comprises a male component that is engaged by snap fit within a corresponding female component defined in a further body.

Preferably the fastening means are configured so that engagement is activated by means of lateral sliding of one body in respect of the other one.

Preferably the body comprises a male component that engages by a lateral sliding a female component defined in a further body, or vice versa.

Preferably the body comprises a profiled channel wherein is inserted a locking pin that is fitted into a corresponding aperture defined in a further body.

Preferably the body comprises a keylock for receiving a pin.

Accordingly all of these objects, taken individually and in any combination thereof, are achieved according to the present invention by using a plurality of the improved systems for joining lightweight panels in order to make a cabin furniture, especially of a galley, such as an aircraft galley.

Preferably the system is used for joining together a horizontal panel with a vertical panel.

Preferably the vertical panel is a side panel or a back panel.

Preferably the system is used for joining together a horizontal panel with a lower vertical panel and an upper vertical panel.

Preferably the system is used for joining together a horizontal panel with a side vertical panel and a front/back vertical panel.

Preferably the system is used for joining together the edge portion of a vertical front/back panel with the surface of a horizontal panel and with a surface of a side vertical panel.

Preferably the system is used for joining together two vertical panels.

Preferably, the system is used for joining together the edge portion of a vertical panel with the surface of a back panel in correspondence of a central zone of the surface of said back panel.

In another example not according to the invention there is provided an improved system for joining a panel, in particular a lightweight panel, to another panel or to a structure in general characterised in that the system comprises at least one body configured (i.e. shaped and/or sized) to be inserted inside the thickness of a panel edge portion between the two opposite skins of the same panel, said system further comprises means for the releasable (i.e. non-permanent and in a way that enables parts to be joined/disjoined repeatedly) fastening of said body to said another panel or structure.

In another example not according to the invention there is provided an improved system for joining panels, in particular for joining at least two lightweight panels together, the system comprising:
- at least one first body configured to be inserted inside the thickness of the edge portion of a first panel between the two opposite skins of the same first panel,
- at least one second body configured to be inserted inside the thickness of the edge portion of at least one second panel between the two opposite skins of the same second panel,
- means for releasably fastening- that is in a non-permanent way or in a way that enables parts to be joined/disjoined repeatedly - said first body to the second body, thus joining together said panels.

In another example not according to the invention there is provided an improved assembly for making a cabin furniture, especially of a galley, the system comprising:
- a first lightweight panel that comprises a core sandwiched between two skins, a cavity being defined inside the thickness of the edge portion of the first panel by removing a portion of the core and being delimited by the skins of the same panel;
- at least one first body inserted inside said cavity of the first lightweight panel;
- a second lightweight panel that comprises a core sandwiched between two skins, a cavity being defined inside the thickness of the edge portion of the second panel by removing a portion of the core and being delimited by the skins of the same panel;
- at least one second body inserted inside said cavity of the second lightweight panel;
- means for releasably fastening- that is in a non-permanent way or in a way that enables parts to be joined/disjoined repeatedly - said first body to the second body, thus joining together said panels.

In another example not according to the invention there is provided an improved method for obtaining an assembly for making a cabin furniture, especially of a galley, the method comprising steps of:
- removing from a first lightweight panel, that comprises a core sandwiched between two skins, a portion of the core so as to obtain a cavity that is defined inside the thickness of the edge portion and that is delimited by the skins of the same panel;
- inserting at least one first body inside said cavity of the first lightweight panel;
- removing from a second lightweight panel, that comprises a core sandwiched between two skins, a portion of the core so as to obtain a cavity that is defined inside the thickness of the edge portion and that is delimited by the skins of the same panel;
- inserting at least one second body inside said cavity of the second lightweight panel;
- fastening releasably - that is in a non-permanent way or in a way that enables parts to be joined/disjoined repeatedly - said first body to said second body, thus joining together said panels.

The skilled person will appreciate that all preferred or optional features of the invention described with reference to only some aspects or embodiments of the invention may be applied to all aspects of the invention.

It will be appreciated that optional features applicable to one aspect of the invention can be used in any combination, and in any number. Moreover, they can also be used with any of the other aspects of the invention in any combination and in any number.

The invention will now be described with reference to the accompanying drawings showing, by way of example only, a plurality of embodiments of a joining system in accordance with the invention, in which:
Figure 1 is a perspective view of the improved joining system according to the invention wherein the two blocks that are fastened to each other are out of the corresponding cavity defined in the panel.
Figure 2 is a perspective view of the improved joining system of fig. 1 wherein one of the blocks is partially inserted into the corresponding cavity defined in the panel.
Figure 3 is a perspective view of the improved joining system of fig. 1 wherein one of the two blocks is completely inserted into the corresponding cavity defined in the panel,
Figure 4 is a perspective view of the cavity defined in the panel and intended to receive a corresponding block of the joining system.
Figure 5a is a perspective view of the joining system of fig. 1 wherein the two blocks are unfastened from each other and wherein the fastening means of one block are partially removed.
Figure 5b is a perspective view of the joining system of fig. 1 wherein the two blocks are unfastened from each other.
Figure 6 is a perspective view of only the joining system of fig. 1 wherein the two blocks are fastened to each other by means of the corresponding fastening means.
Figure 7 is a perspective view of a galley that is made with panels joined together by using a plurality of joining systems according to the invention.
Figure 8 is a perspective view of the furniture of the galley of figure 7 wherein the joining systems are suitably illustrated.
Figure 9 is an exploded perspective view of the lower portion of the furniture of figure 8.
Figure 10a is a perspective view of the joining system according to the invention used to join together two vertical panels with a horizontal panel.
Figure 10b is an exploded perspective view of the joining system of fig. 10a.
Figure 11a is an exploded view of an example of a joining system not according to the invention.
Figure 11b is a view according to a vertical section of the joining system of fig. 11a used to join two panels together.
Figure 12a is an exploded perspective view of another example of a joining system not according to the invention.
Figure 12b is a view according to a vertical section of the joining system of fig. 12a used to join two panels together.
Figure 13a is an exploded perspective view of another example of a joining system not according to the invention.
Figure 13b is a view according to a vertical section of the joining system of fig. 13a used to join two panels together.
Figure 14a is an exploded perspective of another example of a joining system not according to the invention.
Figure 14b is a perspective view of the joining system of fig. 14a used to join two panels together.
Figure 15a is a perspective view of another example of a joining system not according to the invention.
Figure 15b is a view according to a vertical section of the joining system of fig. 15a,
Figure 16a is a perspective view of a joining system according to the invention used to join together two vertical panels.
Figure 16b shows the joining system of fig. 16a in a partially exploded view.
Figure 17a is a perspective view of a joining system according to the invention used to join together a vertical panel with a horizontal panel.
Figure 17b shows the joining system of fig. 17a in a partially exploded view.
Figures 17c is a perspective view of the blocks of the joining system of fig. 17a.
Figures 17d is a further perspective view of the blocks of the joining system of fig.17a.
Figure 18a is a perspective view of a joining system according to the invention used to join together two vertical panels in correspondence of the inner zone of one of said panels,.
Figure 18b shows the joining system of fig. 18a in a partially exploded view.
Figures 18c and 18d are perspective views of the blocks of the joining system of fig. 18a.
Figure 19a is a perspective view of a joining system according to the invention used to join together a front vertical panel, a side vertical panel and a horizontal panel.
Figure 19b shows the joining system of fig. 19a in a partially exploded view.
Figures 19c, 19d and 19d are perspective views of the blocks of the joining system of fig. 19a.

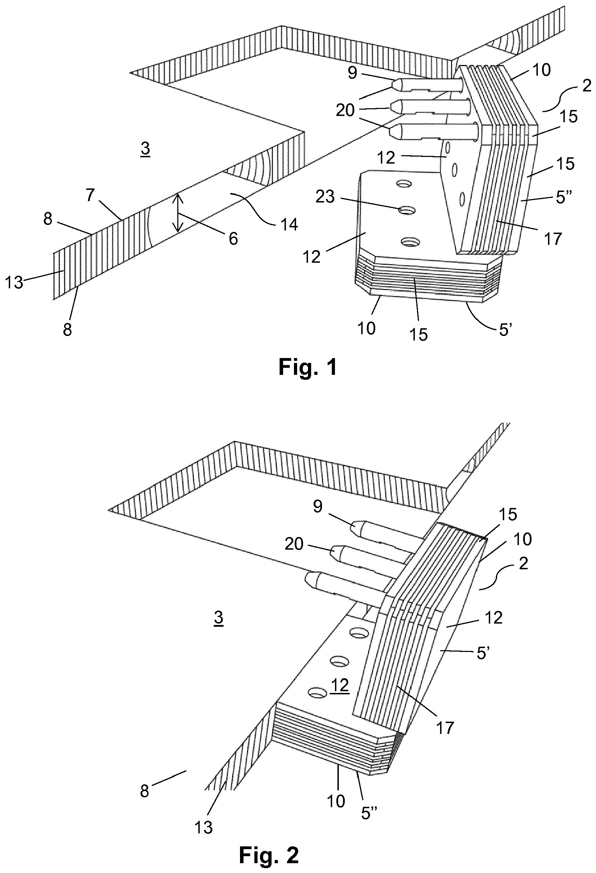

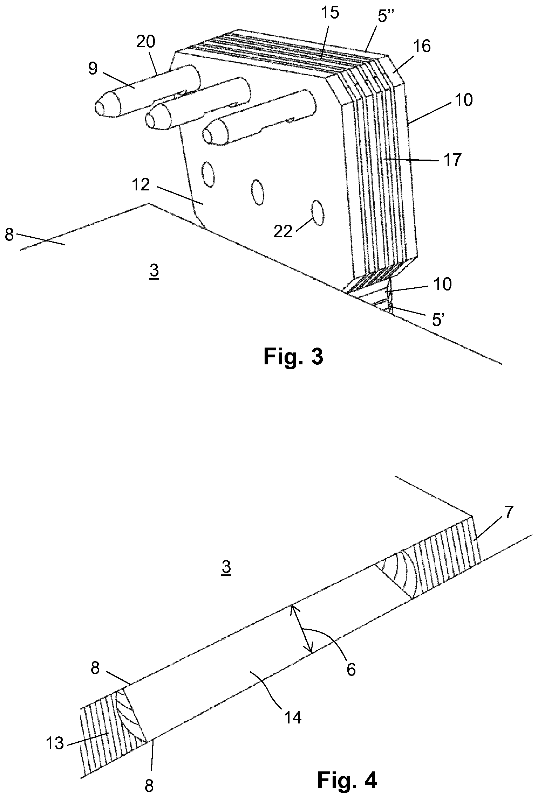

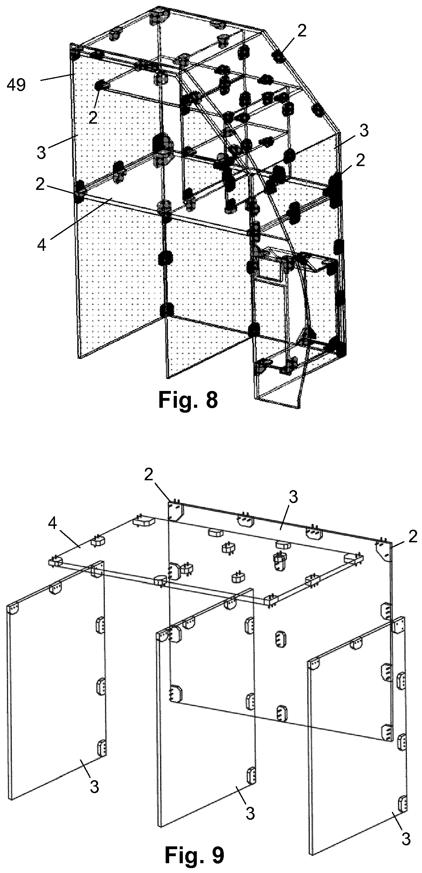

Referring to embodiment shown in figures 1-9, there is shown a system 2 for joining a first panel 3, in particular a lightweight panel, to a structure such as a wall, frame or other panel 4. The system 2 comprises at least one body 5' that is configured to be inserted inside the thickness 6 of a panel 3 between mutually opposing surfaces of the panel. The system 2 further comprises at least one fastening arrangement 9 for the releasable (i.e. non-permanent and in a way that enables parts to be joined/disjoined repeatedly) fastening, preferably for the releasable mechanical fastening, of said body 5' with another panel 4, another body 5" to be located within another panel 4, or a with a structure (not shown). The releasable nature of the fastening arrangement 9 allows the system 2 to be used to join lightweight panels 3,4 in a way that is non-permanent, enabling such panels to be replaced and/or reconfigured within e.g. an aircraft cabin.

The system 2 is configured for joining together two (or even more) panels 3 and 4, particularly for joining at least two lightweight panels together. More in detail, the system 2 comprises: at least one first body 5' configured to be inserted inside the thickness 6 of the edge 7 of a first panel 3 between the two opposite skins 8 of the same first panel; at least one second body 5" configured to be inserted inside the thickness 6 of the edge 7 of a second panel 4 between the two opposite skins 8 of the same second panel; and fastening arrangement 9 for releasably fastening - that is in a non-permanent way or in a way that enables parts to be joined/separated repeatedly - the first body 5' to the second body 5" in order to join together the first panel 3 and second panel 4.

The panel 3 and/or 4 comprises a core 13 sandwiched between two skins 8. Preferably, the panel 3 and/or 4 comprises a resin board. In particular, the core 13 is a cellular core of hexagonal honeycomb that, preferably, is made of paper sheet. Conveniently, the core 13 is made of flame-resistant material. Preferably, the core 13 is made of honeycomb paper sheet coated and bonded together with a resin, in particular phenolic resin. The core 13 is made of a material also known with the trademark Nomex ^{®}. The skins 8 are lightweight cover sheets and, preferably, they are made of woven fiberglass.

Each panel 3 and/or 4 comprises a cavity 14 that is defined inside the panel thickness 6 at an edge portion 7 of the respective panel 3,4. Preferably, said edge cavity 14 of the panel 3 and/or 4 is obtained by removing the core 13 and is delimited and defined by the skins 8 of the same panel. The skilled person will appreciate that a body 5',5" may be provided in an edge cavity 14, or in a cavity towards the centre of a panel 3,4, away from an edge portion 7.

Each body 5',5" consists of a block 10 having a thickness that substantially corresponds to the internal distance between the facing skins 8 (i.e. corresponds to the thickness 6, shown in figure 1) of the panel 3 into which said body is to be inserted. Each block 10 has two main planar surfaces 12 that are parallel and which make contact with the internal surfaces of the skins 8 of the panel 3 when inserted into a cavity 14 within the panel 3. Each block 10 is sized so that both its main planar surfaces 12 engage (i.e. are in contact with) the internal surface of the corresponding skin 8 of the panel 3,4. Each block 10 has a thickness that substantially corresponds to the height of the core 13 of the panel 3 and/or 4. In use, block 10 is press-fitted inside the cavity 14 of the panel 3,4 between the skins 8 of the same panel and is bonded in place by using an adhesive, resin or glue.

Each block 10 comprises two main parallel planar surfaces 12 and four rectangular lateral surfaces 15 defined therebetween. Each body 5,5" comprises two pairs of substantially parallel lateral surfaces 15 defined between the two main planar surfaces 12. Each lateral surface 15 is perpendicular to the two main planar surfaces 12. The distance between the two parallel planar surfaces 12 corresponds to the height of the lateral surfaces 15 and to the thickness of said block 10. The angle between neighbouring lateral surfaces 15 is 90° and the corners 16 between neighbouring lateral surfaces 15 are chamfered at an angle of 45°. The respective planes defined by the chamfered corners 16 are also perpendicular to the two main planar surfaces 12.

Each block 10 has a prismatic or parallelepiped shape. Each block 10 is shaped as a plate, i.e. it is thin in comparison to its length and width. Each block 10 may be made of a rigid material such as metal and/or metal alloy, preferably of aluminum or steel. The use of aluminium provides a lightweight body suitable for use in an aircraft cabin. Advantageously, blocks 10 may be made of polymeric material, such as thermoplastic reinforced plastic or polyether ether ketone (PEEK).

At least one of the main planar surfaces 12 and/or the lateral surfaces 15 of the block 10 is configured for receiving glue for defining a mechanical key to hold the inserted body in place inside a panel 3,4. Each block 10 comprises at least one adhesion enhancement arrangement to improve the adhesion properties of the body to enable the body to be adhered to e.g. a lightweight panel 3,4 more effectively. Adhesion enhancement arrangement(s) can be located on any surface of the block 10.

In the embodiment of figures 1-9 the adhesion enhancement arrangement comprises ribs or grooves located on the lateral surface 15 of the block 10. The ribs and/or grooves 17 are adapted for receiving adhesive, resin or glue, so as to define a mechanical key to hold the block in place inside the panel 3 and/or 4. Each rib and/or groove 17 extends in a direction that is substantially perpendicular to the direction of the height of the block 10 (i.e. parallel to the main planar surfaces 12).

The adhesion enhancement arrangement can comprise any featured or non-flat surface on the block 10 which increases the surface area of the block 10 and thereby increases the contact area between the body and any adhesive, resin or glue. In suitable alternative embodiments, one or both the main planar surfaces 12 and/or the lateral surface 15 of the block 10 may be knurled, scratched, roughened and/or scored, to create a keying surface for a better gripping of the glue used for bonding the block between the skins 8 of the panel 3 and/or 4. Alternatively or additionally, the adhesion enhancement arrangement can comprise e.g. a plurality of stopped holes in a regular arrangement, or one or more elongate recesses, into which adhesive, resin or glue may be retained. Elongate recesses may extend in a direction which is substantially parallel to the main planar surfaces 12 of the block 10. One or more of the surfaces of the block may be smooth.

The fastening arrangement 9 comprises at least one pin 20 that is associated with the blocks 10 of the two bodies 5', 5" intended to be joined. Each pin 20 is releasably attachable to a block 10 and protrudes from a block 10 in a direction which is perpendicular to the surface of the block 10 from which said pin 20 protrudes.

In the embodiment of figures 1-9, the fastening means 9 comprise three aligned pins 20. Preferably, these pins 20 are aligned according to one of the dimensions of the main parallel planar surfaces 12 of the block. In particular, there are pins 20 that are fixed to the block so as to protrude from one of the main parallel planar surfaces 12 of the same block and/or from the lateral surface 15 of the same block. In preferred embodiments each pin protrudes from a block 10 at a right angle to the main surfaces 12 of the block 10 and parallel to the lateral surfaces of the block 10, although the skilled person will appreciate that each pin may protrude from a respective block 10 at an acute or obtuse angle to a surface. Preferably, the system includes pins 20 that protrude from the thickness of the block 10.

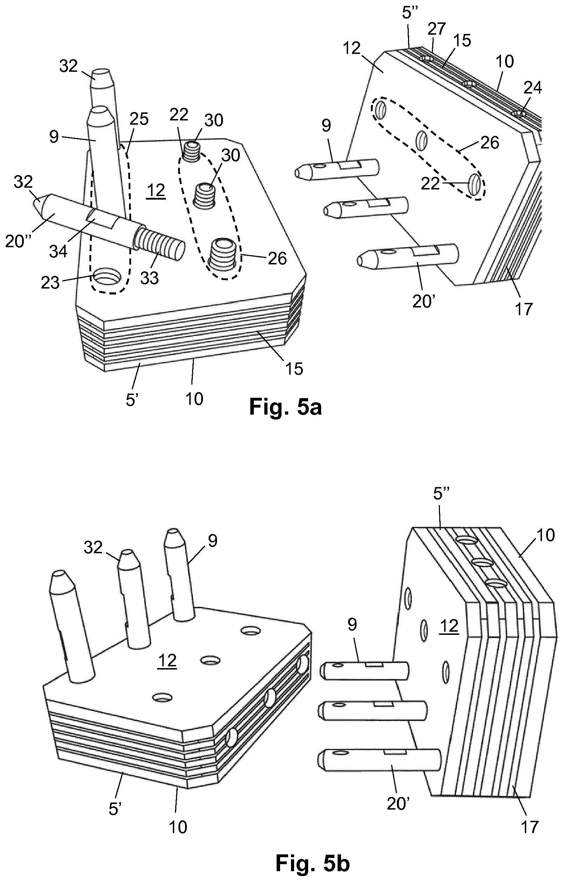

As shown in figure 5a, each pin 20 comprises a substantially cylindrical elongate shaft having a tapered end portion 32 at one end thereof and an externally threaded end portion 33 located at opposing ends thereof. Each pin is releasably attachable to a block 10, although in alternative embodiments each pin can be defined in a single piece with (i.e. integrally formed with) a body 5'. Each pin is releasably attachable to the first body 5' and the second body 5".

Each body 5',5" comprises at least one receiving arrangement for receiving and releasably retaining the pins 20. Each receiving arrangement comprises one or more holes or apertures located on one or more surfaces of a body 5',5". Each receiving arrangement comprises a plurality of holes or apertures, for example two or three stopped holes or apertures, each including an opening located on a surface of the body. Each opening provides an entrance to a respective channel in the body 5',5", each channel in a respective receiving arrangement being substantially straight, substantially parallel and passing part or all of the way through the body 5',5" to a predefined depth.

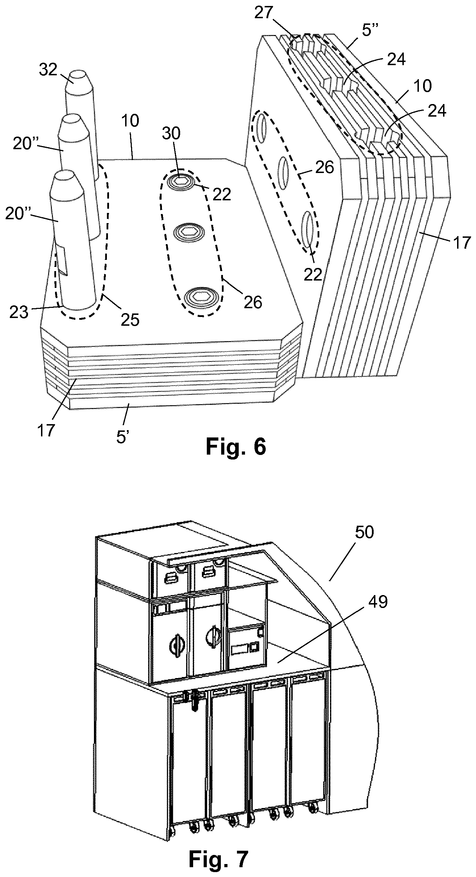

Turning to figures 5 and 6, there are shown two bodies 5',5" each having a first receiving arrangement 25, a second receiving arrangement 27, and a third receiving arrangement 26. The first receiving arrangement 25 is located on a main planar surface 12 of each respective body 5',5" and comprise three holes 23 used to receive and retain the threaded portions 33 of three respective pins 20. Holes 23 include internally threaded channels inside the bodies 5',5". The length of the threaded end portion 33 of each pin 20 substantially corresponds to the depth of the holes 23.

The bodies 5',5" each include a second receiving arrangement 27 located on a respective lateral surface 15 of each respective body 5',5". Each second receiving arrangement 27 includes a plurality of non-threaded holes 24 used to receive three respective pins 20 attached to the other respective body 5",5'. Each hole 24 includes an opening and a channel inside a body 5',5". Each channel in the second receiving arrangement 27 is adapted to receive the shaft and tapered end portion 32 of a respective pin 20; the length of each pin 20, not including the threaded end portion 33, substantially corresponds to the depth of each hole 24.

Each hole 23 in the first receiving arrangement 25 is perpendicular to the holes 24 in the second receiving arrangement 27. Pins 20 retained in the first and second fastening arrangements of a single body 5',5" protrude from said body 5',5" at a right angle to one another. As shown in figure 6, the first receiving arrangements 25 are located proximal to one of the edges of the main planar surface 12 of a body 5',5".

Each body 5',5" comprises a third receiving arrangement 26 for receiving releasable securing members in the form of grub screws 30. The grub screws 30 can be used to secure the pins 20 within a block 5',5" and thereby prevent the accidental extraction of the fastening arrangements 9 along the development direction of the receiving arrangements and/or fastening arrangements 9. Each third receiving arrangement 26 comprises three holes or apertures 22 located on a main planar surface 12 of a body 5',5". Each pin 20 has a cut out or undercut 34 intended to be clamped down by a respective grub screw 30.

Each hole 22 in the third receiving arrangement 26 comprises an internally threaded channel configured to receive and retain a grub screw 30. Each channel of the third receiving arrangement 26 is located within a body 5',5" and extends between an opening on a main planar surface 12 of the body and a channel of the second receiving arrangement 27, intersecting a channel in the second receiving arrangement 27. Each grub screw 30 is operable to partially enter into a channel in the second receiving arrangement 27 to thereby engage with and retain a pin 20 within a block 5',5".

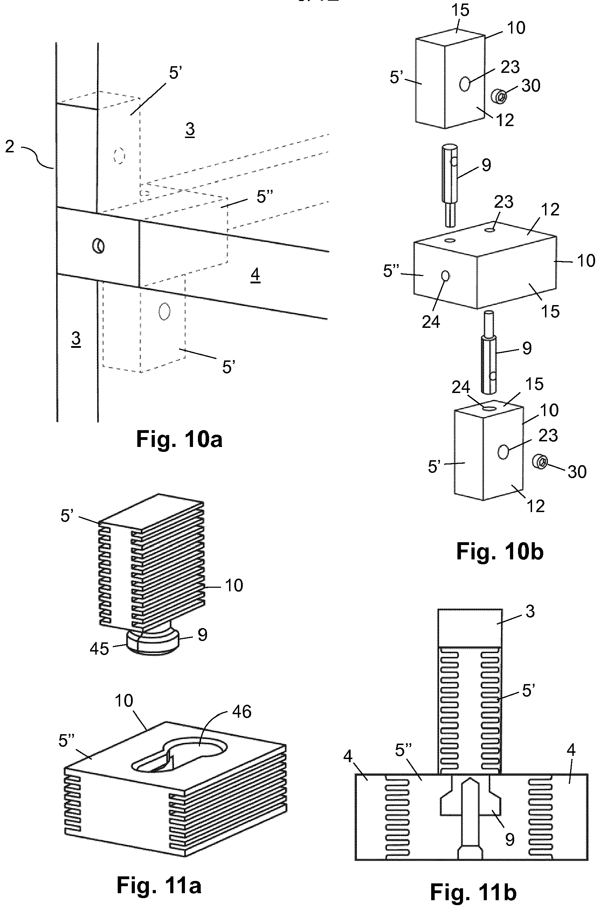

In one alternative example of the system 2 which is not according to the invention, the fastening means 9 comprise a male-female coupling. In particular a male component 45 is defined on a first block 10' while a female component 46 is defined on another block 10". In particular, as shown in figures 11a and 11b, there is a block 10 of the first body 5' provided with a key 45 (for example a dowel) that is defined in a single piece with the same block. Preferably, the block 10 of the other element 5" to be joined comprises a keylock 46 for receiving said key 45.

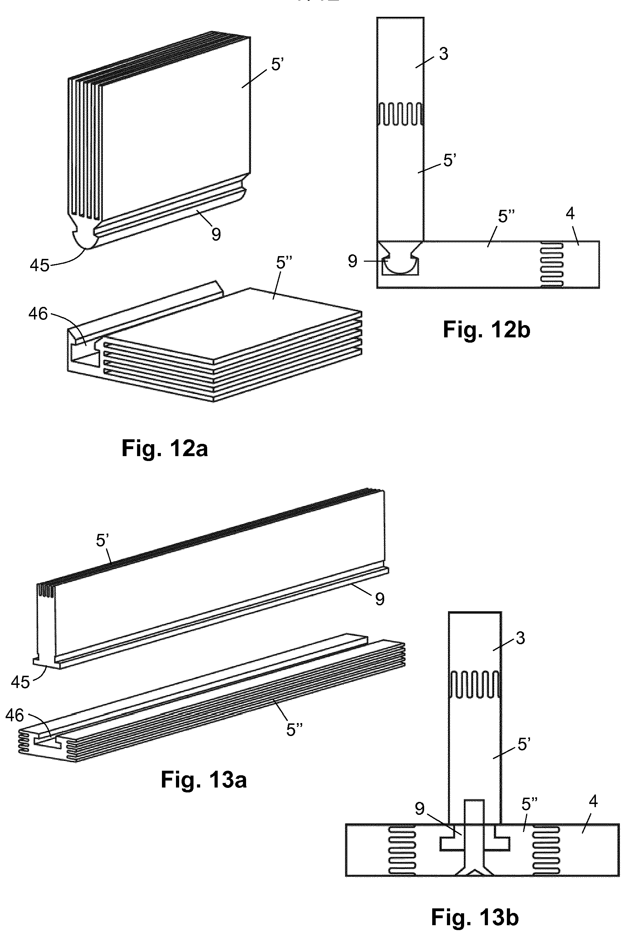

In one further alternative example of the system 2, which is not according to the invention, the fastening means 9 comprise snap fitting means. Advantageously, as shown in figures 12a, 12b, 13a, 13b, 14a and 14b, the block 10 of a first body 5' comprises a portion 45 that is engaged by snap fit within a corresponding cavity 46 defined in the block 10 of the other body 5".

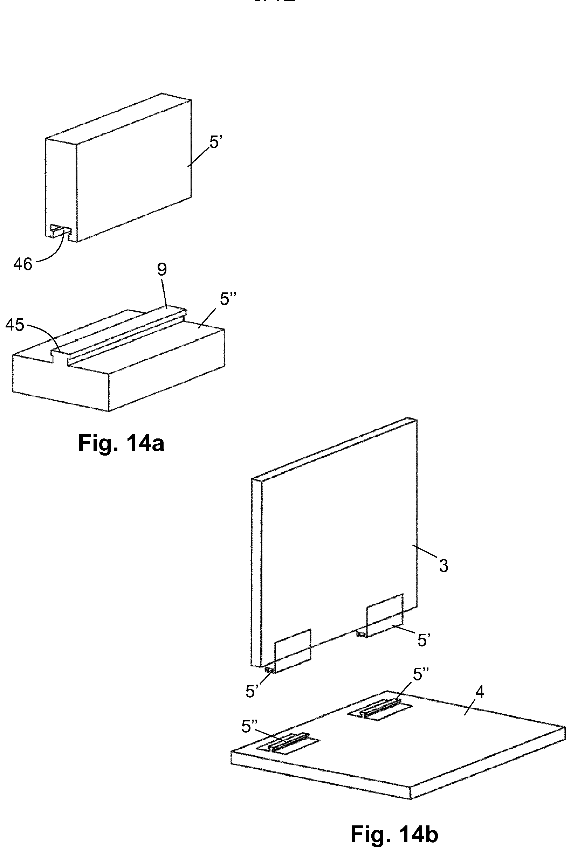

In the examples of the system 2 shown in figures 12a, 12b, 13a, 13b, 14a and 14b, the fastening means 9 are configured so that their engagement is activated by means of lateral sliding of the block of one body 5' in respect of the block of the other body 5". In particular, the male component 45 of the first body 5' is engaged by a lateral sliding within a female component 46 defined in the other body 5" (as shown in figures 12a, 12b, 13a and 13b), or vice versa (as shown in figures 14a and 14b).

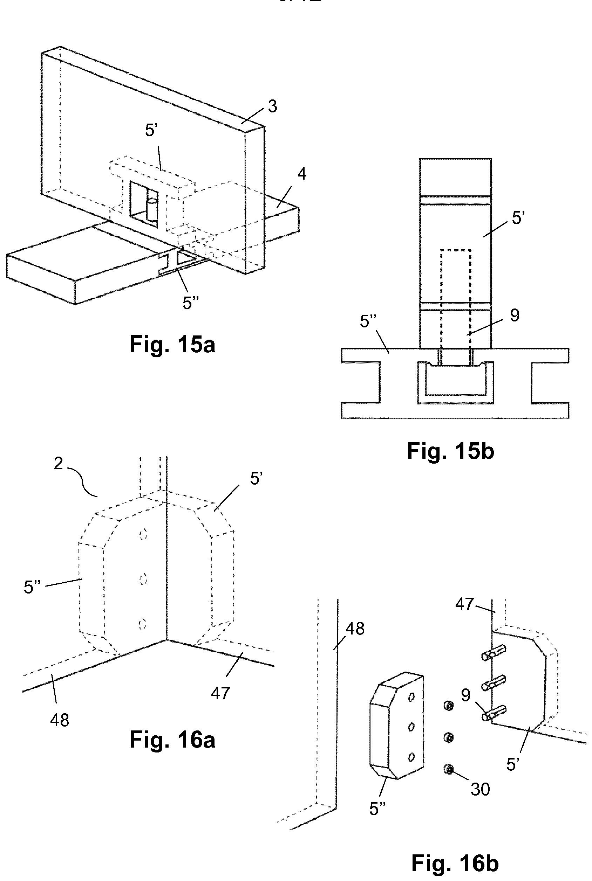

In one further alternative example of the system 2, which is not according to the invention, shown in figures 15a and 15b, the fastening means 9 comprises a profiled channel defined a first block 10 wherein is inserted a locking pin that is fitted into a corresponding aperture defined in another block 10".

A cabin furniture 49, in particular of a galley 50, may be obtained by using a plurality of lightweight panels 3,4 that are suitably joined together by means of a plurality of joining systems 2.

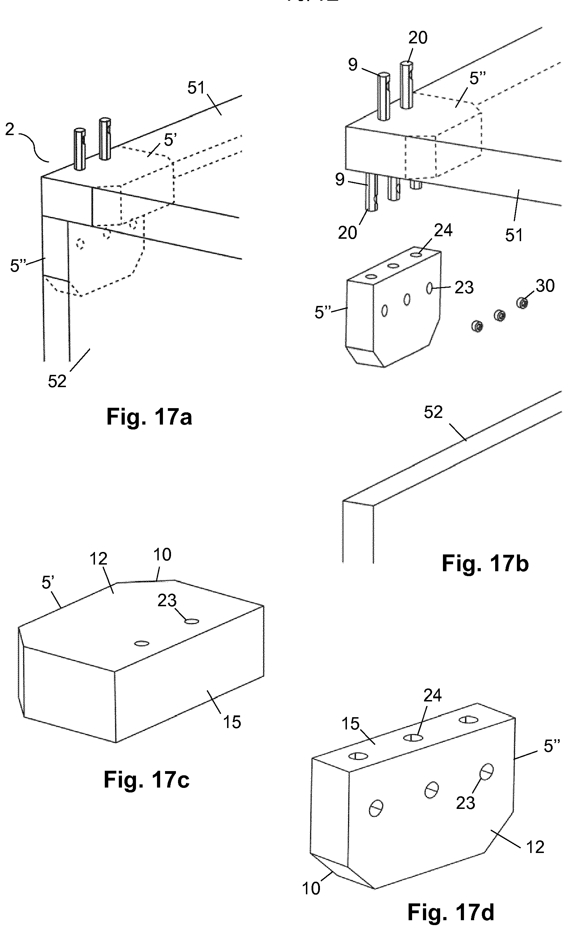

As shown in figures 16a and 16b, the system 2 may be used for joining together two vertical panels 47 and 48 so as to define a vertical corner of the cabin furniture 49. The system 2 may be used for joining together a horizontal panel 51 with a vertical panel 52. Preferably, this vertical panel can be a side panel or a back panel of the cabin furniture 49. In particular, as shown if figures 17a and 17b, the system 2 may be used for joining together a horizontal panel 51 with a lower vertical panel 52 and an upper vertical panel (not shown).

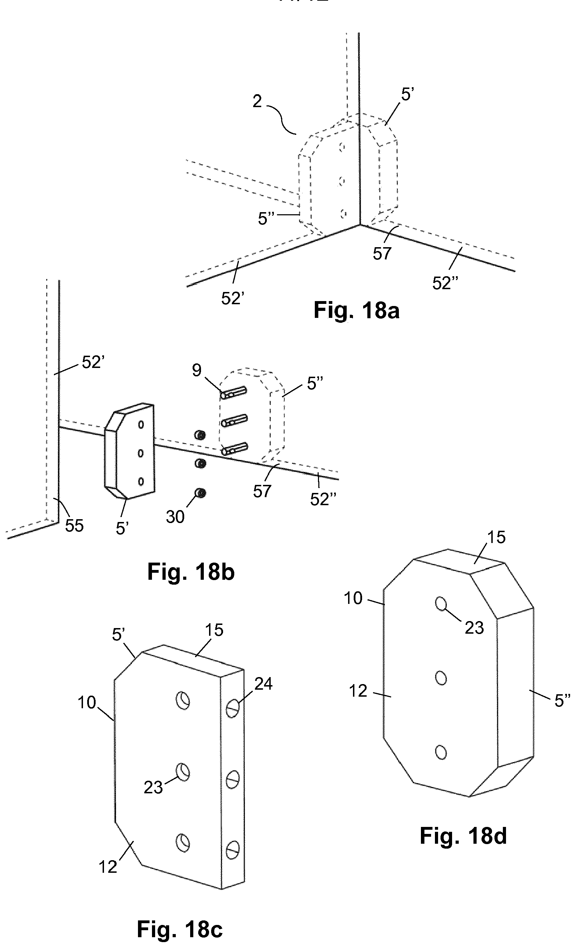

As shown if figures 18a and 18b, the system 2 may be used for joining together two vertical panels 52' and 52". Preferably, the system 2 is used for joining together the edge 55 of a first vertical panel 52' with the external surface 57 of a front/back vertical panel 52" in correspondence of an inner zone of said surface 57.

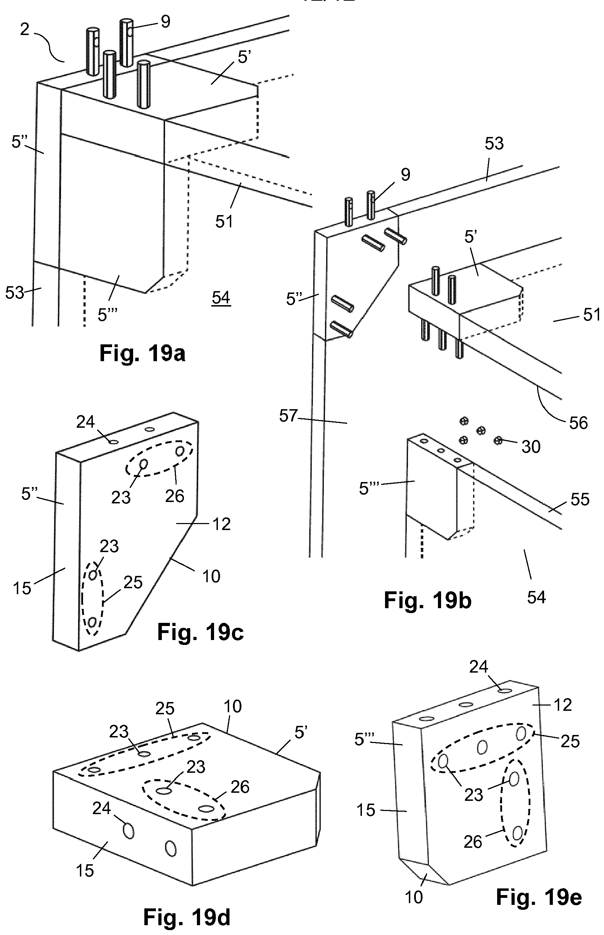

As shown in figures 19a and 19b, the system 2 may be used for joining together a horizontal panel 51 with a side vertical panel 53 and a front/back vertical panel 54. In particular, the system 2 comprises three bodies 5', 5" and 5'" that are inserted within the thickness of the edge respectively in the horizontal panel 51, in the side vertical panel 53 and in the front vertical panel 54. More in detail, the system 2 is used for joining together the edge 55 of a vertical front/back panel 54 with the external surface 56 of a horizontal panel 51 and with the external surface 57 of a side vertical panel 53.

From the above disclosure, the advantages of the joining system are clear, since it allows a fast, easy, secure and non-permanent joining of two lightweight panels, thus enabling to contain also the construction and assembly costs of the furniture (especially of a cabin furniture, such as the one of a galley) that is obtained by means of the so joined panels. In particular, this is obtained because the body (i.e. the blocks) inserted within the edge of each panel are joined together by mechanical fastening means that are releasable.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

## Claims

1. A system (2) for joining a panel (3) to a structure, the system (2) comprising: at least one body (5,5',5‴), the body (5,5',5"') comprising two main planar surfaces (12) which are substantially parallel and comprising one or more lateral surfaces (15), each lateral surface (15) being defined between the two main planar surfaces (12), the body (5,5',5"') being configured to be located inside the thickness of the panel (3) between two mutually opposing surfaces of the panel (3); and at least one fastening means (9) for releasably fastening the body (5,5',5"') to the structure, the body (5,5',5"') comprising first and second receiving means (25,27) for releasably attaching the fastening means (9) to the body (5,5',5‴), each receiving means (25,27) comprising one or more holes or apertures located on a surface of the body (5',5",5"'), each hole or aperture comprising an opening (22) located on a surface of the body (5,5',5"'), each opening (22) providing an entrance to a respective channel in the body (5,5',5‴), the or each channel of the first receiving means (25) being right angled in respect of the or each channel of the second receiving means (27) **characterised in that** each lateral surface (15) of the body (5',5",5‴) comprises an adhesion enhancement means, each adhesion enhancement means comprising a plurality of elongate recesses (17), each elongate recess (17) extending in a direction substantially parallel to the main planar surfaces (12) of the body (5,5',5"').

2. A system (2) as claimed in claim 1 wherein each elongate recess (17) extends the full width of a lateral surface (15) of the body (5',5",5"').

3. A system (2) as claimed in claim 1 or claim 2 wherein each receiving means (25,27) comprises a plurality of holes or apertures.

4. A system (2) as claimed in claim 3 wherein each channel of the first receiving means (25) is threaded.

5. A system (2) as claimed in claim 4 wherein each channel of the second receiving means (27) is not threaded.

6. A system (2) as claimed in any preceding claim, wherein the or each body (5,5',5"') comprises a plurality of lateral surfaces (15) defined between the two main planar surfaces (12).

7. A system (2) as claimed in claim 6, wherein each lateral surface (15) is substantially planar and substantially perpendicular to the two main planar surfaces (12).

8. A system (2) as claimed in any preceding claim, the system (2) further comprising a panel (3), wherein the at least one body (5,5',5"') is located inside the thickness of the panel (3) between two mutually opposing surfaces of the panel (3).

9. A system (2) as claimed in claim 8, wherein the at least one body (5,5',5‴) has a thickness that substantially corresponds to the internal distance between the mutually opposing surfaces of the panel (3).

10. A system (2) as claimed in any one of claim 8 or claim 9, wherein the panel (3) is a lightweight panel (3) comprising a core sandwiched between two skins.

11. A system (2) as claimed in any one of claims 8 to 10, wherein the at least one body (5,5',5‴) is bonded to the panel (3) via adhesive means.

12. A system (2) as claimed in any of the preceding claims, wherein the at least one fastening means (9) comprises at least one pin (20) that is securely associated with two bodies (5,5',5‴) intended to be inserted respectively into two panels (3) to be joined.

13. A system (2) as claimed in any of the preceding claims, wherein the system comprises a securing means (30) to secure the fastening means (9) within the at least one body (5,5',5‴).

14. A system (2) as claimed in claim 13, wherein the or each body (5,5',5‴) comprises at least one third receiving means (26) for receiving the securing means (30).

15. A cabin furniture (49), especially of a galley, that comprises a plurality of lightweight panels (3,4) that are joined by a joining system (2) as claimed in any of the preceding claims.

## Patentansprüche

1. System (2) zum Verbinden einer Platte (3) mit einer Struktur, wobei das System (2) Folgendes umfasst: mindestens einen Körper (5, 5', 5‴), wobei der Körper (5, 5', 5‴) zwei plane Hauptflächen (12) umfasst, die im Wesentlichen parallel sind und eine oder mehrere laterale Flächen (15) umfassen, wobei jede laterale Fläche (15) zwischen den zwei planen Hauptflächen (12) definiert ist, wobei der Körper (5, 5', 5‴) dazu ausgelegt ist, sich innerhalb der Stärke der Platte (3) zwischen zwei einander entgegengesetzten Flächen der Platte (3) zu befinden; und mindestens eine Befestigungseinrichtung (9) zum lösbaren Befestigen des Körpers (5, 5', 5‴) an der Struktur, wobei der Köper (5, 5', 5‴) eine erste und zweite Aufnahmeeinrichtung (25, 27) zum lösbaren Anbringen der Befestigungseinrichtung (9) am Körper (5, 5', 5‴) umfasst, wobei jede Aufnahmeeinrichtung (25, 27) ein(en) oder mehrere Löcher oder Durchbrüche umfasst, die sich auf einer Fläche des Körpers (5', 5", 5‴) befinden, wobei jedes Loch oder jeder Durchbruch eine Öffnung (22) umfasst, die sich auf einer Fläche des Körpers (5, 5', 5‴) befindet, wobei jede Öffnung (22) einen Zugang zu einem jeweiligen Kanal im Körper (5, 5', 5‴) vorsieht, wobei der oder jeder Kanal der ersten Aufnahmeeinrichtung (25) in Bezug zu dem oder jedem Kanal der zweiten Aufnahmeeinrichtung (27) rechtwinklig ist, **dadurch gekennzeichnet, dass** jede laterale Fläche (15) des Körpers (5', 5", 5‴) eine Haftungsverstärkungseinrichtung umfasst, wobei jede Haftungsverstärkungseinrichtung mehrere längliche Vertiefungen (17) umfasst, wobei sich jede längliche Vertiefung (17) in eine Richtung im Wesentlichen parallel zu den planen Hauptflächen (12) des Körpers (5, 5', 5‴) erstreckt.

2. System (2) nach Anspruch 1, wobei sich jede längliche Vertiefung (17) über die gesamte Breite einer lateralen Fläche (15) des Körpers (5', 5", 5‴) erstreckt.

3. System (2) nach Anspruch 1 oder Anspruch 2, wobei jede Aufnahmeeinrichtung (25, 27) mehrere Löcher oder Durchbrüche umfasst.

4. System (2) nach Anspruch 3, wobei jeder Kanal der ersten Aufnahmeeinrichtung (25) mit einem Gewinde versehen ist.

5. System (2) nach Anspruch 4, wobei jeder Kanal der zweiten Aufnahmeeinrichtung (27) nicht mit einem Gewinde versehen ist.

6. System (2) nach einem der vorstehenden Ansprüche, wobei jeder Körper (5, 5', 5‴) mehrere laterale Flächen (15) umfasst, die zwischen den zwei planen Hauptflächen (12) definiert sind.

7. System (2) nach Anspruch 6, wobei jede laterale Fläche (15) im Wesentlichen plan und im Wesentlichen senkrecht zu den zwei planen Hauptflächen (12) ist.

8. System (2) nach einem der vorstehenden Ansprüche, wobei das System (2) ferner eine Platte (3) umfasst, wobei der mindestens eine Körper (5, 5', 5‴) innerhalb der Stärke der Platte (3) zwischen zwei einander entgegengesetzten Flächen der Platte (3) angeordnet ist.

9. System (2) nach Anspruch 8, wobei der mindestens eine Körper (5, 5', 5‴) eine Stärke aufweist, die im Wesentlichen dem inneren Abstand zwischen den einander entgegengesetzten Flächen der Platte (3) entspricht.

10. System (2) nach Anspruch 8 oder Anspruch 9, wobei die Platte (3) eine Leichtbauplatte (3) ist, die einen Kern zwischen zwei Außenhäuten umfasst.

11. System (2) nach einem der Ansprüche 8 bis 10, wobei der mindestens eine Körper (5, 5', 5‴) über eine Haftungseinrichtung mit der Platte (3) verbunden ist.

12. System (2) nach einem der vorstehenden Ansprüche, wobei die mindestens eine Befestigungseinrichtung (9) mindestens einen Stift (20) umfasst, der zwei Körpern (5, 5', 5‴) fix zugeordnet ist, die dazu bestimmt sind, jeweils in zwei zu verbindende Platten (3) eingesetzt zu werden.

13. System (2) nach einem der vorstehenden Ansprüche, wobei das System eine Fixierungseinrichtung (30) zum Fixieren der Befestigungseinrichtung (9) innerhalb des mindestens einen Körpers (5, 5', 5‴) umfasst.

14. System (2) nach Anspruch 13, wobei der oder jeder Körper (5, 5', 5‴) mindestens eine dritte Aufnahmeeinrichtung (26) zur Aufnahme der Fixierungseinrichtung (30) umfasst.

15. Kabinenmöbelstück (49), insbesondere einer Bordküche, die mehrere Leichtbauplatten (3, 4), die über ein Verbindungssystem (2) nach einem der vorstehenden Ansprüche verbunden sind, umfasst.

## Revendications

1. Système (2) d'assemblage d'un panneau (3) à une structure, le système (2) comprenant : au moins un corps (5, 5', 5‴), le corps (5, 5', 5‴) comprenant deux surfaces planes principales (12) qui sont sensiblement parallèles et comprenant une ou plusieurs surfaces latérales (15), chaque surface latérale (15) étant définie entre les deux surfaces planes principales (12), le corps (5, 5', 5‴) étant conçu pour être situé à l'intérieur de l'épaisseur du panneau (3) entre deux surfaces mutuellement opposées du panneau (3) ; et au moins un moyen de fixation (9) servant à fixer de manière amovible le corps (5, 5', 5‴) à la structure, le corps (5, 5', 5‴) comprenant des premier et second moyens de réception (25, 27) servant à fixer de manière amovible le moyen de fixation (9) au corps (5, 5', 5‴), chaque moyen de réception (25, 27) comprenant un ou plusieurs trous ou ouvertures situés sur une surface du corps (5', 5", 5‴), chaque trou ou ouverture comprenant une ouverture (22) située sur une surface du corps (5, 5', 5‴), chaque ouverture (22) fournissant une entrée vers un canal respectif dans le corps (5, 5', 5‴),
le ou chaque canal du premier moyen de réception (25) étant à angle droit par rapport au ou à chaque canal du second moyen de réception (27), **caractérisé en ce que** chaque surface latérale (15) du corps (5', 5", 5‴) comprend un moyen de renforcement de l'adhérence, chaque moyen de renforcement de l'adhérence comprenant une pluralité d'évidements allongés (17), chaque évidement allongé (17) s'étendant dans une direction sensiblement parallèle aux surfaces planes principales (12) du corps (5, 5', 5‴).

2. Système (2) selon la revendication 1, chaque évidement allongé (17) s'étendant sur toute la largeur d'une surface latérale (15) du corps (5', 5", 5‴).

3. Système (2) selon la revendication 1 ou la revendication 2, chaque moyen de réception (25, 27) comprenant une pluralité de trous ou d'ouvertures.

4. Système (2) selon la revendication 3, chaque canal du premier moyen de réception (25) étant fileté.

5. Système (2) selon la revendication 4, chaque canal du second moyen de réception (27) n'étant pas fileté.

6. Système (2) selon l'une quelconque des revendications précédentes, le ou chaque corps (5, 5', 5‴) comprenant une pluralité de surfaces latérales (15) définies entre les deux surfaces planes principales (12).

7. Système (2) selon la revendication 6, chaque surface latérale (15) étant sensiblement plane et sensiblement perpendiculaire aux deux surfaces planes principales (12).

8. Système (2) selon l'une quelconque des revendications précédentes, le système (2) comprenant en outre un panneau (3), l'au moins un corps (5, 5', 5‴) étant situé à l'intérieur de l'épaisseur du panneau (3) entre deux surfaces mutuellement opposées du panneau (3).

9. Système (2) selon la revendication 8, l'au moins un corps (5, 5', 5‴) ayant une épaisseur qui correspond sensiblement à la distance interne entre les surfaces mutuellement opposées du panneau (3).

10. Système (2) selon l'une quelconque des revendications 8 ou 9, le panneau (3) étant un panneau léger (3) comprenant une âme prise en sandwich entre deux peaux.

11. Système (2) selon l'une quelconque des revendications 8 à 10, l'au moins un corps (5, 5', 5‴) étant lié au panneau (3) par l'intermédiaire d'un moyen adhésif.

12. Système (2) selon l'une quelconque des revendications précédentes, l'au moins un moyen de fixation (9) comprenant au moins une broche (20) qui est associée de manière sûre à deux corps (5, 5', 5‴) destinés à être insérés respectivement dans deux panneaux (3) à assembler.

13. Système (2) selon l'une quelconque des revendications précédentes, le système comprenant un moyen de fixation (30) servant à fixer le moyen de fixation (9) à l'intérieur de l'au moins un corps (5, 5', 5‴).

14. Système (2) selon la revendication 13, le ou chaque corps (5, 5', 5‴) comprenant au moins un troisième moyen de réception (26) servant à recevoir le moyen de fixation (30).

15. Meuble de cabine (49), notamment de cuisine, qui comprend une pluralité de panneaux légers (3, 4) qui sont assemblés par un système d'assemblage (2) selon l'une quelconque des revendications précédentes.
